(19) Europäisches Patentamt
European Patent Office
Office européen des brevets

(11) **EP 2 358 499 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **09751800.5**

(22) Anmeldetag: **02.11.2009**

(51) Int Cl.:
**B23K 26/08** (2014.01)

(86) Internationale Anmeldenummer:
**PCT/EP2009/007838**

(87) Internationale Veröffentlichungsnummer:
**WO 2010/063350 (10.06.2010 Gazette 2010/23)**

(54) **VERFAHREN UND MANIPULATOR ZUR LASERBEARBEITUNG EINES WERKSTÜCKES**

METHOD AND DEVICE FOR LASER MACHINING

MÉTHODE ET DIEPOSITIF DE TRAVAIL D'UNE PIÈCE AU LASER

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.12.2008 DE 102008060053**

(43) Veröffentlichungstag der Anmeldung:
**24.08.2011 Patentblatt 2011/34**

(73) Patentinhaber: **KUKA Roboter GmbH**
**86165 Augsburg (DE)**

(72) Erfinder: **TSCHARNUTER, Dietmar**
**86316 Friedberg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 1 600 244 EP-A2- 1 629 933**
**WO-A1-2005/009667 DE-B3-102004 011 769**

**Beschreibung**

Die vorliegende Erfindung betrifft ein Verfahren zur Laserbearbeitung, insbesondere zum Laserschweißen, eines Werkstückes mittels eines Laserwerkzeuges, welches an einer mehrachsigen Hand eines Manipulators, insbesondere eines Roboters, angeordnet ist, wobei ein von dem Laserwerkzeug ausgehender Laserstrahl auf dem Werkstück eine Bahn abfährt, welche einen ersten Abschnitt und einen hiervon verschiedenen zweiten Abschnitt aufweist, sowie einen Manipulator mit einer Steuervorrichtung, die zur Durchführung eines solchen Verfahrens eingerichtet ist.

Beispielsweise aus der DE 10 2007 001 979 A1 und der EP 1 600 244 B1 ist es bekannt, einen Laserkopf, durch den ein Laserstrahl auf ein Werkstück fokussiert wird, an einer mehrachsigen Hand eines Roboters anzuordnen und durch den Roboter zu verfahren, so dass der von dem Laserwerkzeug ausgehender Laserstrahl auf dem Werkstück eine Bahn abfährt. Dabei kann, wie beispielsweise aus der EP 1 568 436 B1 bekannt, der Laserstrahl zusätzlich zur Bewegung durch den Roboter im Laserkopf optisch abgelenkt werden.

Um die Bearbeitungszeiten zu verkürzen, schlagen die DE 10 2004 011 769 B3 und DE 103 44 526 A1 Verfahren nach dem Oberbegriff des Anspruchs 1 vor. Nach diesen Druckschriften soll die Ablenkung des Laserstrahls im Wesentlichen durch eine Bewegung der drei Handachsen des Roboters erfolgen. In den Ausführungsbeispielen wird zum Abfahren einer rechteckigen Schweißbahn jeweils die fünfte und sechste Handachse bewegt. Im Ausführungsbeispiel der DE 103 33 456 A1 wird die Ablenkung des Laserstrahls auf einer geradlinigen Bahn durch Bewegen der fünften Handachse dargestellt.

Werden jedoch wie in der DE 10 2004 011 769 B3 und DE 103 44 526 A1 zum Abfahren unterschiedlich orientierter Bahnabschnitte unterschiedliche Achsen der Manipulatorhand eingesetzt, übertragen sich Unterschiede in der Bewegungscharakteristik zwischen den verschiedenen Achsen auf die erzeugte Bahn des Laserstrahls und können damit zu abschnittsweise inhomogenen Bearbeitungsbahnen führen. Solche unterschiedlichen Bewegungscharakteristiken können insbesondere daraus resultieren, dass bei baumstrukturierten Manipulatoren unterschiedliche Achsen unterschiedliche Trägheiten bewegen. Während beispielsweise die sechste Handachse eines sechsachsigen Knickarmroboters nur noch den Abtriebsflansch und ein daran angeordnetes Werkzeug bewegt, bewegt die zweite Achse desselben Roboters die Schwinge, die daran angeordnete Hand sowie das an ihr befestigte Werkzeug mit entsprechend größeren Trägheiten, die zudem aufgrund der veränderlichen Hebelarme von den Stellungen der weiteren Achsen drei bis sechs abhängen. Entsprechend führt eine Bewegung des Laserstrahls durch die zweite Achse beim Abfahren eines Bahnabschnittes zu größeren Bahnabweichungen als eine Bewegung des Laserstrahls durch die sechste Achse beim Abfahren eines hierzu senkrechten Bahnabschnittes.

Die EP 1 629 933 A1 offenbart ein 6-achsiges Robotersystem mit Laserwerkzeug und schlägt zwei zusätzliche Achsen 7 und 8 vor, an dem die Laserquelle angebracht ist. Diese werden während eines Wechsels einer Bearbeitungsbahn verfahren, um diesen Wechsel zu beschleunigen, i.e. den Laser schneller auf den nächsten Startpunkt zu positionieren und Ausführungszeiten zu verringern.

Aufgabe der vorliegenden Erfindung ist es, die manipulatorgestützte Laserbearbeitung eines Werkstückes zu verbessern.

Zur Lösung dieser Aufgabe ist ein Verfahren nach dem Oberbegriff des Anspruchs 1 durch dessen kennzeichnende Merkmale weitergebildet. Anspruch 8 stellt einen Manipulator mit einer Steuervorrichtung zur Durchführung eines solchen Verfahrens unter Schutz, Anspruch 10 bzw. 11 ein entsprechendes Computerprogramm bzw. Computerprogrammprodukt, insbesondere ein Speichermedium oder einen Datenträger. Die Unteransprüche betreffen vorteilhafte Weiterbildungen.

Ein erfindungsgemäßes Verfahren wird nachfolgend anhand des Laserschweißens näher erläutert, worunter insbesondere die Erzeugung von durchgehenden Schweißnähten, unterbrochenen Schweißnähten und/oder Pendelnähten mit seitlicher Auslenkung verstanden wird. Das erfindungsgemäße Verfahren ist jedoch gleichermaßen auch beim Laserschneiden, Lasergravieren oder anderer Laserbearbeitungen anwendbar.

Zur Bearbeitungen eines Werkstückes richtet ein Laserwerkzeug kontinuierlich oder intermittierend einen Laserstrahl auf das Werkstück. Das Laserwerkzeug kann beispielsweise als Remote-Laserwerkzeug einen Laserkopf aufweisen, der vorzugsweise eine Optik zum Fokussieren und/oder Abschatten eines Laserstrahls umfasst und über eine Leiteinrichtung, beispielsweise ein Glasfaserkabel und/oder Umlenkoptiken, mit einer Laserquelle verbunden ist. Gleichermaßen kann das Laserwerkzeug auch selbst die Laserquelle umfassen.

Das Laserwerkzeug ist lösbar oder dauerhaft an einer mehrachsigen Hand eines Manipulators, insbesondere eines Industrieroboters, angeordnet, beispielsweise an einem Handflansch befestigt. Der Manipulator weist vorzugsweise vier, fünf, sechs oder mehr Achsen auf, wobei bevorzugt eine vierte, fünfte und sechste Achse als Dreh- oder Linearachse ausgestaltet sind und Achsen der mehrachsigen Hand bilden. Vorteilhafterweise schneiden sich wenigstens zwei dieser Handachsen in einem Kreuzungspunkt und sind paarweise orthogonal. Es können weitere Achsen, beispielsweise eine oder mehrere Achsen einer Werkstückaufnahme, etwa eine siebte Drehachse eines Drehtisches oder eine siebte Linearachse eines Förderbandes, vorgesehen sein.

Durch Bewegen der Achsen, vorzugsweise im Wesentlichen der Handachsen, fährt ein von dem Laserwerkzeug ausgehender Laserstrahl auf dem Werkstück eine vorgegebene Bahn ab, welche einen ersten Abschnitt und wenigstens einen zweiten Abschnitt aufweist, der zum ersten Abschnitt nicht-kollinear ist.

Eine Bahn kann allgemein durch ihr sogenanntes begleitendes Dreibein beschrieben werden. Hierzu ist in jedem Bahnpunkt eine Tangente $t(s)$ definiert, die durch Ableiten eines Ortsvektors $r(s)$ zu diesem Punkt nach einem Bahnparameter, beispielsweise der Bahnlänge $s$ e[0, 1], entsteht:

$$t(s) := dr(s)/ds \qquad (1)$$

Senkrecht bzw. orthogonal hierzu ist eine Bahnnormale $n(s)$ definiert, die diesen Punkt mit dem zugehörigen Krümmungsmittelpunkt verbindet. Die Binormale $b(s)$ ergänzt Tangente und Bahnnormale zu dem orthogonalen begleitenden Dreibein:

$$t(s) \perp n(s) \perp b(s) \qquad (2)$$

Beispielsweise stellt der Radius die Bahnnormale zu einer Kreisbahn dar. Bei nicht gekrümmten Bahnabschnitten, deren Krümmungsmittelpunkt im Unendlichen liegt, entartet die Bahnnormale zu einer Geradenschar, die die Normalebene auf die Tangente definieren. Insbesondere in diesem Fall kann diejenige Senkrechte zum Bahnabschnitt, die zugleich parallel zu der Oberfläche des Werkstückes ist, auf die der Laserstrahl auftrifft, die Bahnnormale im Sinne der vorliegenden Erfindung bilden.

Als kollinear werden Bahnabschnitte bezeichnet, deren Tangenten miteinander fluchten oder parallel zueinander orientiert sind. Eine Rechteckbahn weist dementsprechend beispielsweise je zwei kollineare Abschnitte, i.e. ihre Längs- und ihre Breitseiten auf, wobei eine Längs- und eine Breitseite nicht-kollinear zueinander sind. Eine Dreiecksbahn weist dementsprechend drei nicht-kollineare Abschnitte auf usw..

Während im eingangs erläuterten bekannten Stand der Technik unterschiedliche nicht-kollineare Abschnitte durch die Bewegung unterschiedlicher Achsen des Manipulators mit den damit verbundenen Nachteilen abgefahren werden, wird erfindungsgemäß vorgeschlagen, eine bestimmte Handachse der Hand des Manipulators, insbesondere eine letzte Handachse der Hand des Manipulators, beim Abfahren sowohl des ersten als auch des zweiten Abschnittes im Wesentlichen kollinear, i.e. parallel oder fluchtend zu der Bahnnormalen des jeweiligen Abschnittes zu orientieren. Damit können sowohl der erste als auch der zweite Abschnitt mit dem Laserstrahl im Wesentlichen durch die Bewegung derselben Handachse des Manipulators realisiert und so abschnittsweise inhomogene Bearbeitungsbahnen aufgrund unterschiedlicher Bewegungscharakteristiken der Achsen vermieden werden. Insbesondere kann die bestimmte Handachse im Wesentlichen durch den Momentanpol der Bewegung des Laserstrahls auf dem Werkstück verlaufen.

Bevorzugt wird die bestimmte Handachse im Wesentlichen beim Abfahren der gesamten Bahn mit dem Laserstrahl im Wesentlichen kollinear zu der jeweiligen Bahnnormalen orientiert. Hierzu kann der Manipulator die Hand und/oder eine Werkstückaufnahme vor dem Abfahren eines Abschnittes der Bahn entsprechend verfahren und so das Laserwerkzeug und die bestimmte Handachse entsprechend positionieren.

Die bestimmte Handachse ist bevorzugt eine letzte Handachse der Hand des Manipulators, insbesondere eine sechste Achse, vorzugsweise eine sechste Drehachse. Dies ist besonders deshalb vorteilhaft, weil die letzte Handachse keine weiteren Manipulatorglieder mitbewegen muss, somit minimalen Trägheits- und Schwingungseinflüssen ausgesetzt ist, und daher besonders präzise gesteuert werden kann, was die Qualität der mit dem Laserstrahl abgefahrenen Bahn, beispielsweise der erzeugten Schweißbahn, verbessert.

Um Schwingungseinflüsse, insbesondere derjenigen Achsen, die größere Trägheiten bewegen, zu reduzieren, bewegt der Manipulator die Hand und/oder eine Werkstückaufnahme in einer bevorzugten Ausführung während des Abfahrens eines oder mehrerer Abschnitte der Bahn im Wesentlichen nicht. Ein Umsetzen des Laserwerkzeuges kann dann, wie vorstehend erläutert, vor dem Abfahren des nächsten Bahnabschnittes erfolgen.

Gleichermaßen kann der Manipulator jedoch, insbesondere zur Verkürzung der Bearbeitungszeiten, die Hand und/oder eine Werkstückaufnahme auch während des Abfahrens eines Abschnittes der Bahn entsprechend verfahren, wobei vorteilhaft diese Versatzbewegung der Hand bzw. der Werkstückaufnahme und die Bewegung der bestimmten Handachse zu einer vorgegebenen Bewegung des Laserstrahls überlagert werden. Insbesondere können die anderen Achsen im Wesentlichen nur eine durch die Bewegung der bestimmten Handachse bedingte Höhenausgleichsbewegung des Laserwerkzeugs bewirken. Bei bevorzugt langen Brennweiten, insbesondere von 300 mm und mehr, ist ein solcher Höhenausgleich häufig nicht erforderlich. Vorteilhaft ermöglichen lange Brennweiten zudem bei gleichen Schwenkwinkeln längere Schweißnähte bei einem im Wesentlichen stehenden Manipulator.

Bevorzugt wird eine Leistung und/oder eine Brennweite des Laserstrahls in Abhängigkeit von der Bewegung des Laserstrahls gesteuert. Wird ein Bahnabschnitt im Wesentlichen durch Drehung des Laserwerkzeuges um die bestimmte Handachse abgefahren, kann sich der Abstand des Laserwerkzeuges zur Oberfläche des Werkstückes ändern, wobei diese Änderungen vorteilhafterweise mit zunehmendem Abstand zwischen Laserwerkzeug und Werkstück abnehmen. Dem kann durch entsprechende große und/oder verstellbare Brennweiten sowie gleichermaßen durch entsprechende Änderung der Laserleistung Rechnung getragen werden. Wird beispielsweise ein Laserstrahl gegenüber einer senkrecht zur Werkstückoberfläche orientierten Ausgangsposition, in der sein Brennpunkt im Abstand ρ von dem Laserwerkzeug auf der Werkstückoberfläche liegt, um den Winkel α um die bestimmte Handachse verschwenkt, kann sein Brennpunkt etwa auf p/cos α verschoben werden. Die Laserleistung kann ebenfalls in Abhängigkeit vom Einstrahlwinkel α des Laserstrahls am Werkstück gesteuert werden, um dem winkelabhängigen, unterschiedlichen Einkoppelverhalten des Laserstrahls Rechnung zu tragen. Bei der Bildung von unterbrochenen Nähten oder sogenannten Steppnähten kann die Laserleistung auch zeitweise abgeschaltet werden. Als in der Leistung steuerbare und auch abschaltbare Laserquellen eignen sich insbesondere Faserlaser, Scheibenlaser oder diodengepumpte Nd-YAG-Laser.

Bevorzugt positioniert der Manipulator während des Abfahrens eines oder mehrerer Abschnitte der Bahn das Laserwerkzeug in einem kontaktfreien Abstand schwebend über dem Werkstück. Gleichermaßen kann das Werkstück jedoch während der Laserbearbeitung auch durch eine Andrückvorrichtung am Manipulator mit einer Kontaktkraft beaufschlagt werden, um beispielsweise zu verschweißende Werkstücke gegeneinander zu fixieren.

Insbesondere zur Realisierung sogenannter Pendelnähte kann der Laserstrahl, vorzugsweise über eine der anderen Handachsen, seitlich von dem eigentlichen Bahnverlauf ausgelenkt werden. Solche im Vergleich zur Bahn- oder Abschnittslänge kleine seitliche Auslenkungen werden bevorzugt bei der Definition der (Haupt)Bahntangene bzw. -normale nicht berücksichtigt, indem beispielsweise ein gefilterter oder durch Interpolation definierter Bahnverlauf zugrundegelegt wird. Soll beispielsweise eine sinusförmige Pendelnaht $r(s)$ um eine Gerade $r0 + t0(s)$ auf der Werkstückoberfläche erzeugt werden, so dass gilt:

$$r(s) = r0 + t0(s) + A \times \sin(\Omega \times s) \qquad (3),$$

kann die Richtung $t0$ der Geraden die Bahntangente $t(s)$ im Sinne der vorliegenden Erfindung definieren, die Senkrechte hierzu, die vorzugsweise zugleich parallel zur Werkstückoberfläche ist, die Bahnnormale $n(s)$.

Weitere Vorteile und Merkmale ergeben sich aus den Unteransprüchen und den Ausführungsbeispielen. Hierzu zeigt, teilweise schematisiert:

Fig. 1A: die Kinematik eines Manipulators nach einer Ausführung der vorliegenden Erfindung in der Seitansicht beim Abfahren eines ersten Bahnabschnittes;

Fig. 1B die Kinematik nach Fig. 1A in der Draufsicht;

Fig. 2: die Kinematik nach Fig. 1B beim Abfahren eines zweiten Bahnabschnittes;

Fig. 3A: die Kinematik nach Fig. 1A beim Abfahren eines dritten Bahnabschnittes;

Fig. 3B: die Kinematik nach Fig. 3A in der Draufsicht; und

Fig. 4: die Kinematik nach Fig. 3B beim Abfahren eines vierten Bahnabschnittes.

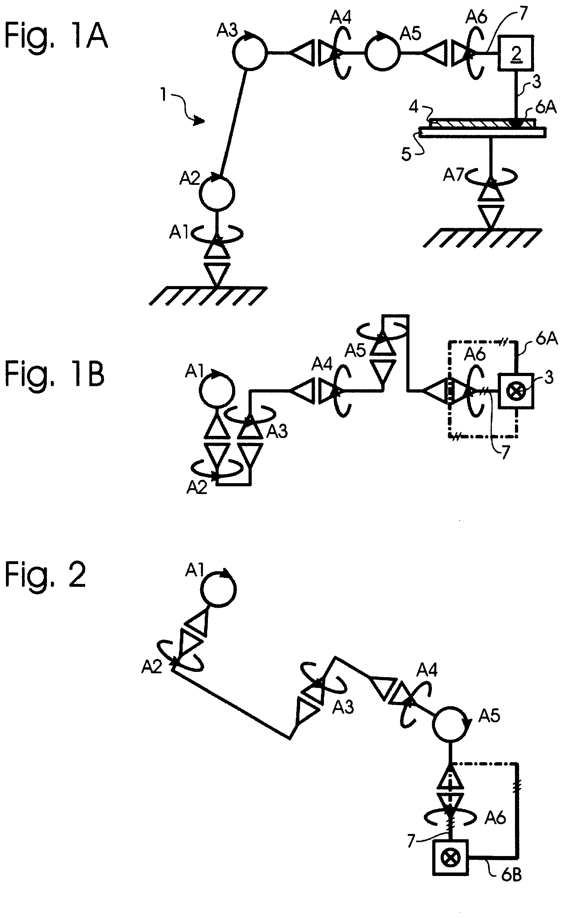

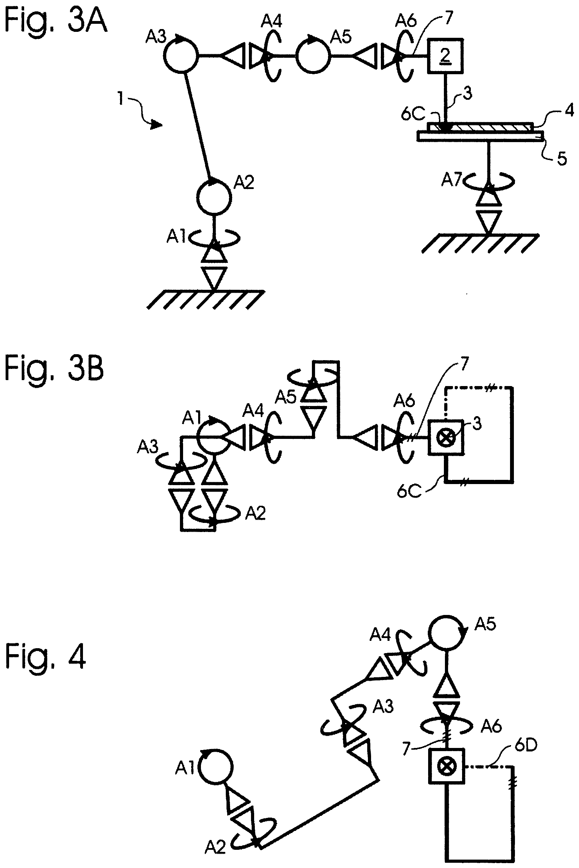

Die Figurenfolge Fig. 1 bis Fig. 4 zeigt in der Draufsicht (Fig. 1B, 2, 3B, 4) bzw. Seitansicht (Fig. 1A, 3A) die Kinematik eines sechsachsigen Roboters 1 beim Erzeugen einer strichpunktiert dargestellten rechteckförmigen Schweißbahn 6 in einem Werkstück 4, welches auf einem Drehtisch 5 mit der Drehachse A7 fixiert ist.

Der Knickarmroboter 1 weist in an sich bekannter Weise ein Karussell auf, das um eine erste Drehachse A1 gegenüber einem Grundgestell drehbar ist. Eine Schwinge ist um eine hierzu orthogonale zweite Drehachse A2 gegenüber dem Karussell drehbar. Um eine hierzu parallele dritte Drehachse A3 ist eine dreiachsige Zentralhand 7 drehbar, deren vierte, fünfte und sechste bzw. letzte Achse A4, A5 bzw. A6 sich stets in einem Punkt schneiden, wobei die dritte, vierte, fünfte und sechste Achse A3 bis A6 paarweise orthogonal zueinander sind.

An der Hand 7 ist ein Remote-Laserwerkzeug 2 befestigt, welches mit einer Laserquelle verbunden ist (nicht dargestellt) und einen Laserstrahl 3 mittels einer Optik (ebenfalls nicht dargestellt) auf das Werkstück 4 fokussiert. Die Lasereinrichtung 2 ist dabei so an der Hand 7 befestigt, dass die optische Achse des Laserstrahls 3 im Wesentlichen orthogonal zur sechsten Handachse A6 orientiert ist.

Zur Erzeugung eines ersten Schweißbahnabschnittes 6A positioniert der Roboter 1 das Laserwerkzeug 2 in der in Fig. 1A, 1B gezeigten Position, i.e. Lage und Orientierung, im Wesentlichen mittig über dem zu erzeugenden ersten Schweißbahnabschnitt 6A, so dass die sechste Handachse A6 kollinear zur Bahnnormalen des ersten Bahnabschnittes 6A orientiert ist.

Da der gerade Bahnabschnitt 6A keine Krümmung aufweist, stellt jede Senkrechte zum Bahnabschnitt 6A, i.e. jede Gerade der Zeichenebene der Fig. 1A eine Bahnnormale im Sinne der vorliegenden Erfindung dar, insbesondere diejenige Senkrechte, die parallel zur Werkstückoberfläche ist. Durch diese bevorzugte Orientierung der Handachse A6 zu der Werkstückoberfläche, auf die der Laserstrahl 3 trifft, wird der Abstand zwischen Laserwerkzeug 2 und Werkstückoberfläche minimiert und entsprechend die in das Werkstück 4 eingebrachte Laserleistung maximiert.

Während die übrigen Achsen A1 bis A5 und A7 im Wesentlichen stillstehen, fährt der Laserstrahl 3 nun durch entsprechendes Verschwenken des Laserwerkzeuges 2 um die sechste Handachse A6 den ersten Bahnabschnitt 6A, i.e. eine erste Längsseite der rechteckförmigen Bahn 6 ab. Dabei kann der Höhenversatz, der sich durch die Kreisbahn eines festen Brennpunktes des Laserstrahls 3 um die sechste Drehachse A6 ergibt, beispielsweise durch entsprechende Verschiebung des dann variablen Brennpunktes durch eine Optik des Laserwerkzeuges, etwa durch einen Revolver-Optikkopf oder eine verfahrbare Lineareinheit zur Fokusnachführung, oder durch geringfügige Bewegungen der Achsen A2, A3, A5 kompensiert (nicht dargestellt) oder bei genügen großer Brennweite vernachlässigt werden. Gleichermaßen kann durch eine geringfügige Oszillation der fünften Handachse A5 in einer alternativen Ausgestaltung auch eine Pendelnaht mit einer Hauptachse 6A erzeugt werden (nicht dargestellt).

Dann positioniert der Roboter 1 das Laserwerkzeug 2 in der in Fig. 2 gezeigten Position im Wesentlichen am Ende eines zu erzeugenden zweiten Schweißbahnabschnittes 6B, so dass die sechste Handachse A6 kollinear zur Bahnnormalen dieses zweiten Bahnabschnittes 6B orientiert und parallel zur Werkstückoberfläche ist. Hierzu wird die erste Achse A1 um ca. 30° gedreht, die vierte Handachse A4 um 90° und die fünfte Handachse A5 um 60°. Der zweite Bahnabschnitt 6B, i.e. die vordere Breitseite der rechteckförmigen Bahn 6, ist orthogonal und somit nicht-kollinear zum ersten Bahnabschnitt 6A.

Während die übrigen Achsen nun wieder im Wesentlichen stillstehen und allenfalls geringfügige Bewegungen zum Höhenausgleich oder zur Erzeugung einer Pendelnaht ausführen, fährt der Laserstrahl 3 durch entsprechendes Verschwenken des Laserwerkzeuges 2 um die sechste Handachse A6 den zweiten Bahnabschnitt 6B ab, wobei der Höhenversatz auch durch entsprechende Verschiebung des variablen Brennpunktes kompensiert oder vernachlässigt werden kann.

Nun positioniert der Roboter 1 das Laserwerkzeug 2 in der in Fig. 3A, 3B gezeigten Position im Wesentlichen mittig über einem zu erzeugenden dritten Schweißbahnabschnitt 6C, so dass die sechste Handachse A6 kollinear zur Bahnnormalen dieses Bahnabschnittes 6C orientiert und parallel zur Werkstückoberfläche ist. Dies erfolgt durch Verdrehung der Achsen A2, A3 gegenüber der in Fig. 1 gezeigten Pose. Während die übrigen Achsen dann wieder stillstehen und allenfalls geringfügige Bewegungen zum Höhenausgleich oder zur Erzeugung einer Pendelnaht ausführen, fährt der Laserstrahl 3 durch entsprechendes Verschwenken des Laserwerkzeuges 2 um die sechste Handachse A6 den dritten Bahnabschnitt 6C ab, der seinerseits als zweite Längsseite der rechteckförmigen Bahn 6 nicht-kollinear zu dem vorhergehenden zweiten Bahnabschnitt 6B ist.

In entsprechender Weise fährt der Laserstrahl 3 schließlich in der in Fig. 4 dargestellten Pose, die aus der Pose gemäß Fig. 2 durch Drehen um die erste Achse A1 um -60° hervorgeht, einen vierten Bahnabschnitt 6D in Form einer hinteren Breitseite der rechteckförmigen Bahn 6 ab, der nicht-kollinear zu dem vorhergehenden dritten Bahnabschnitt 6C ist. Der Roboter 1 positioniert das Laserwerkzeug 2 hierzu in der in Fig. 4 gezeigten Position im Wesentlichen an den Anfang des zu erzeugenden Schweißbahnabschnittes 6D.

Wie vorstehend erläutert, fährt der Laserstrahl 3 die Bahn 6, die vier paarweise orthogonale und somit aufeinanderfolgend nicht-kollineare Abschnitte 6A bis 6D aufweist, im Wesentlichen durch Verschwenken des Laserwerkzeuges 2 um die sechste Handachse A6 der Zentralhand 7 des Roboters 1 ab, so dass vorteilhaft stets im Wesentlichen dieselbe Bewegungscharakteristik dieser bestimmten Handachse A6 genutzt wird und sich zudem Schwingungen in den anderen Achsen vorteilhaft nicht oder nur geringfügig in der Schweißbahn auswirken.

In einer abgewandelten Ausführung kann der Manipulator 1 auch während des Schweißprozesses eine Versatzbewegung über seine Achsen A1 bis A5 ausführen und dabei das Laserwerkzeug 2 relativ zum Werkstück 4 führen. Diese Versatzbewegung und die Bewegung in der sechsten Handachse A6 zur Laserstrahlablenkung können einander überlagert werden. Insbesondere kann der Manipulator 1 eine im wesentlichen konstante Versatzbewegung ausführen, wobei die überlagerte Strahlablenkbewegung dieser Versatzbewegung zumindest partiell entgegengerichtet ist. Die Strahlablenkbewegung kann zusätzlich oder alternativ bei der Bewegungsüberlagerung quer zur Versatzbewegung gerichtet sein.

Bezuaszeichenliste

| | |
|---|---|
| 1 | Roboter (Manipulator) |
| 2 | Laserwerkzeug |
| 3 | Laserstrahl |
| 4 | Werkstück |
| 5 | Werkstückaufnahme |
| 6 | Bahn |
| 6A,...6D | Bahnabschnitt |
| 7 | Hand |
| A1 ,...A6 | Achsen des Roboters |
| A7 | Achse der Werkstückaufnahme |

**Patentansprüche**

1. Verfahren zur Laserbearbeitung, insbesondere zum Laserschweißen, eines Werkstückes (4) mittels eines Laserwerkzeuges (2), welches an einer mehrachsigen Hand (7) eines Manipulators, insbesondere eines Roboters (1), angeordnet ist, wobei ein von dem Laserwerkzeug (2) ausgehender Laserstrahl (3) auf dem Werkstück (4) eine Bahn (6) abfährt, welche einen ersten Abschnitt (6A, 6C) und einen zweiten Abschnitt (6B, 6D) aufweist, welcher zum ersten Abschnitt nicht-kollinear ist,
wobei
eine bestimmte Handachse (A6) der Hand (7) des Manipulators (1) beim Abfahren des ersten Abschnittes (6A, 6C) kollinear zu einer Bahnnormalen des ersten Abschnittes (6A, 6C) und beim Abfahren eines Abschnittes der Bahn (6) im Wesentlichen parallel zu einer Oberfläche des Werkstücks (4) orientiert ist, auf die der Laserstrahl (3) beim Abfahren dieses Abschnittes trifft **dadurch gekennzeichnet, dass** die bestimmte Handachse eine letzte, sechste Achse (A6) der Hand des Manipulators ist, und dass diese beim Abfahren des zweiten Abschnittes (6B, 6D) kollinear zu einer Bahnnormalen des zweiten Abschnittes (6B, 6D) orientiert ist.

2. Verfahren nach dem vorhergehenden Anspruch 1, **dadurch gekennzeichnet, dass** die Bahn (6), die der von dem Laserwerkzeug (2) ausgehende Laserstrahl (3) auf dem Werkstück (4) abfährt, wenigstens einen dritten Abschnitt (6C, 6D) aufweist, und die bestimmte Handachse (A6) der Hand (7) des Manipulators (1) beim Abfahren des dritten Abschnittes (6C, 6D) im Wesentlichen kollinear zu der Bahnnormalen des dritten Abschnittes (6C, 6D) orientiert ist.

3. Verfahren nach einem der vorhergehenden Ansprüche, **dadurch gekennzeichnet, dass** der Manipulator (1) die Hand (7) und/oder eine Werkstückaufnahme (5) während des Abfahrens eines Abschnittes der Bahn (6) verfährt.

4. Verfahren nach einem der vorhergehenden Ansprüche, **dadurch gekennzeichnet, dass** der Manipulator (1) die Hand (7) und/oder eine Werkstückaufnahme (5) während des Abfahrens eines Abschnittes der Bahn (6) im Wesentlichen nicht bewegt.

5. Verfahren nach einem der vorhergehenden Ansprüche, **dadurch gekennzeichnet, dass** eine Leistung und/oder eine Brennweite des Laserstrahls (3) in Abhängigkeit von der Bewegung des Laserstrahls gesteuert wird.

6. Verfahren nach einem der vorhergehenden Ansprüche, **dadurch gekennzeichnet, dass** der Manipulator (1) während des Abfahrens eines Abschnittes der Bahn (6) das Laserwerkzeug (2) in einem kontaktfreien Abstand schwebend über dem Werkstück positioniert.

7. Verfahren nach einem der vorhergehenden Ansprüche, **dadurch gekennzeichnet, dass** der Laserstrahl (3) beim Abfahren eines Abschnittes der Bahn (6) kontinuierlich oder intermittierend auf das Werkstück (4) trifft.

8. Sechsachsiger Manipulator, insbesondere Roboter (1), mit einer mehrachsigen Hand (7), an der ein Laserwerkzeug (2) angeordnet ist, und die eine letzte sechste Achse aufweist, welche beim Abfahren eines Abschnittes der Bahn parallel zu einer Oberfläche des Werkstücks orientiert ist, und mit einer Steuervorrichtung zur Steuerung des Manipulators, **dadurch gekennzeichnet, dass** die Steuervorrichtung zur Durchführung eines Verfahrens nach einem der vorhergehenden Ansprüche eingerichtet ist.

9. Manipulator nach Anspruch 8, **dadurch gekennzeichnet, dass** das Laserwerkzeug ein Remote-Laserwerkzeug (2) aufweist, welches über eine Leiteinrichtung mit einer Laserquelle verbunden ist.

10. Computerprogramm, das die Ausführung eines Verfahrens nach einem der Ansprüche 1 bis 7 bewirkt, wenn es in einer Steuervorrichtung eines Manipulators nach einem der vorhergehenden Ansprüche 8 bis 9 abläuft.

11. Computerprogrammprodukt mit Programmcode, der auf einem maschinenlesbaren Träger gespeichert ist und ein Computerprogramm nach Anspruch 10 umfasst.

**Claims**

1. A method of laser machining, in particular laser welding, of a workpiece (4) by means of a laser tool (2) which is arranged on a multi-axis hand (7) of a manipulator, in particular of a robot (1), wherein a laser beam (3) emanating from the laser tool (2) travels along a path (6) on the workpiece (4), which path has a first portion (6A, 6C) and a second portion (6B, 6D), which is non-collinear in relation to the first portion,
wherein
a specific hand axis (A6) of the hand (7) of the manipulator (1) is oriented collinearly with respect to a normal to the first portion (6A, 6C) of the path during the traversal of the first portion (6A, 6C) and, during the traversal of a portion of the path (6), oriented substantially parallel to a surface of the workpiece (4) which surface the laser beam (3) hits during the traversal of said portion, **characterized in that** said specific hand axis is a final, sixth axis (A6) of the hand of the manipulator, and that this is oriented collinearly with respect to a normal to the second portion (6B, 6D) of the path during the traversal of the second portion (6B, 6D).

2. The method according to the preceding claim 1, **characterized in that** the path (6) which the laser beam (3) emanating from the laser tool (2) travels along on the workpiece (4) comprises at least a third portion (6C, 6D), and **in that** said specific hand axis (A6) of the hand (7) of the manipulator (1) is oriented substantially collinearly with respect to the normal to the third portion (6C, 6D) of the path during the traversal of the third portion (6C, 6D).

3. The method according to any one of the preceding claims, **characterized in that** the manipulator (1) moves the hand (7) and/or a workpiece reception device (5) during the traversal of a portion of the path (6).

4. The method according to any one of the preceding claims, **characterized in that** the manipulator (1) substantially does not move the hand (7) and/or a workpiece reception device (5) during the traversal of a portion of the path (6).

5. The method according to any one of the preceding claims, **characterized in that** a power and/or a focal length of the laser beam (3) is controlled in dependence of the movement of the laser beam.

6. The method according to any one of the preceding claims, **characterized in that** the manipulator (1) positions the laser tool (2) in a non-contact distance suspended above the workpiece during the traversal of a portion of the path (6).

7. The method according to any one of the preceding claims, **characterized in that** the laser beam (3) continuously or intermittently hits the workpiece (4) during the traversal of a portion of the path (6).

8. A six-axis manipulator, in particular a robot (1), with a multi-axis hand (7), on which a laser tool (2) is arranged and which has a final, sixth axis which is oriented parallel to a surface of the workpiece during the traversal of a portion of the path, and with a control device for controlling the manipulator, **characterized in that** the control device is arranged to carry out a method according to any one of the preceding claims.

9. Manipulator according to claim 8, **characterized in that** the laser tool comprises a remote laser tool (2) which is connected to a laser source via a guide device.

10. Computer program which causes a method according to any one of claims 1 to 7 to be carried out when it runs on a control device of a manipulator according to any one of the preceding claims 8 to 9.

11. Computer program product with program code which is stored on a machine-readable medium and which comprises a computer program according to claim 10.

## Revendications

1. Procédé de traitement laser, en particulier de soudage laser, d'une pièce (4) au moyen d'un outil laser (2), lequel est agencé au niveau d'une main multiaxiale (7) d'un manipulateur, en particulier d'un robot (1), dans lequel un faisceau laser (3) partant de l'outil laser (2) parcourt une voie (6) sur la pièce (4), laquelle présente une première section (6A, 6C) et une deuxième section (6B, 6D), laquelle n'est pas colinéaire à la première section,
dans lequel
un axe de main (A6) déterminé de la main (7) du manipulateur (1) est orienté de manière colinéaire à une normale à la voie de la première section (6A, 6C) lors du parcours de la première section (6A, 6C) et de manière sensiblement parallèle à une surface de la pièce (4) lors du parcours d'une section de la voie (6), que le faisceau laser (3) touche lors du parcours de cette section, **caractérisé en ce que** l'axe de main déterminé est un dernier, sixième axe (A6) de la main du manipulateur, et que celui-ci est orienté de manière colinéaire à une normale à la voie de la deuxième section (6B, 6D) lors du parcours de la deuxième section (6B, 6D).

2. Procédé selon la revendication précédente 1, **caractérisé en ce que** la voie (6), que parcourt le faisceau laser (3) partant de l'outil laser (2) sur la pièce (4), présente au moins une troisième section (6C, 6D), et l'axe de main (A6) déterminé de la main (7) du manipulateur (1) est orienté de manière sensiblement colinéaire à la normale à la voie de la troisième section (6C, 6D) lors du parcours de la troisième section (6C, 6D).

3. Procédé selon l'une quelconque des revendications précédentes, **caractérisé en ce que** le manipulateur (1) déplace la main (7) et/ou un logement de pièce (5) pendant le parcours d'une section de la voie (6).

4. Procédé selon l'une quelconque des revendications précédentes, **caractérisé en ce que** le manipulateur (1) ne déplace sensiblement pas la main (7) et/ou un logement de pièce (5) pendant le parcours d'une section de la voie (6).

5. Procédé selon l'une quelconque des revendications précédentes, **caractérisé en ce qu'**une puissance et/ou une distance focale du faisceau laser (3) est commandée en fonction du déplacement du faisceau laser.

6. Procédé selon l'une quelconque des revendications précédentes, **caractérisé en ce que** le manipulateur (1) positionne l'outil laser (2) de manière flottante au-dessus de la pièce à une distance sans contact pendant le parcours d'une section de la voie (6).

**7.** Procédé selon l'une quelconque des revendications précédentes, **caractérisé en ce que** le faisceau laser (3) touche la pièce (4) continûment ou par intermittence pendant le parcours d'une section de la voie (6).

**8.** Manipulateur à six axes, en particulier robot (1), avec une main multiaxiale (7), au niveau de laquelle un outil laser (2) est agencé, et qui présente un dernier, sixième axe, lequel est orienté parallèlement à une surface de la pièce lors du parcours d'une section de la voie, et avec un dispositif de commande pour la commande du manipulateur, **caractérisé en ce que** le dispositif de commande est aménagé pour la réalisation d'un procédé selon l'une quelconque des revendications précédentes.

**9.** Manipulateur selon la revendication 8, **caractérisé en ce que** l'outil laser présente un outil laser distant (2), lequel est relié à une source laser par le biais d'un équipement conducteur.

**10.** Programme informatique, qui entraîne l'exécution d'un procédé selon l'une quelconque des revendications 1 à 7, lorsqu'il se déroule dans un dispositif de commande d'un manipulateur selon l'une quelconque des revendications 8 à 9.

**11.** Produit de programme informatique avec code de programme, qui est enregistré sur un support lisible par machine et comprend un programme informatique selon la revendication 10.

Fig. 1A

Fig. 1B

Fig. 2

Fig. 3A

Fig. 3B

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001979 A1
- EP 1600244 B1
- EP 1568436 B1
- DE 102004011769 B3
- DE 10344526 A1
- DE 10333456 A1
- EP 1629933 A1